(19) Europäisches Patentamt
European Patent Office
Office européen des brevets

(11) **EP 1 680 688 B1**

(12) **EUROPÄISCHE PATENTSCHRIFT**

(45) Veröffentlichungstag und Bekanntmachung des Hinweises auf die Patenterteilung:
**14.09.2016 Patentblatt 2016/37**

(51) Int Cl.:
*G01S 13/34* (2006.01)   *G01S 13/93* (2006.01)

(21) Anmeldenummer: **04765430.6**

(22) Anmeldetag: **21.09.2004**

(86) Internationale Anmeldenummer:
**PCT/EP2004/010550**

(87) Internationale Veröffentlichungsnummer:
**WO 2005/050249 (02.06.2005 Gazette 2005/22)**

(54) **MESSEINRICHTUNG FÜR EIN KRAFTFAHRZEUG**

MEASURING DEVICE FOR A MOTOR VEHICLE

DISPOSITIF DE MESURE POUR VEHICULE AUTOMOBILE

(84) Benannte Vertragsstaaten:
**AT BE BG CH CY CZ DE DK EE ES FI FR GB GR HU IE IT LI LU MC NL PL PT RO SE SI SK TR**

(30) Priorität: **25.10.2003 DE 10349919**

(43) Veröffentlichungstag der Anmeldung:
**19.07.2006 Patentblatt 2006/29**

(73) Patentinhaber:
• **Volkswagen Aktiengesellschaft**
  **38440 Wolfsburg (DE)**
• **S.M.S. Smart Microwave Sensors GmbH**
  **38106 Braunschweig (DE)**

(72) Erfinder:
• **MEINECKE, Marc-Michael**
  **38524 Sassenburg (DE)**
• **MENDE, Ralph**
  **38102 Braunschweig (DE)**
• **BEHRENS, Marc**
  **38106 Braunschweig (DE)**
• **TO, Thanh-Binh**
  **39179 Barleben (DE)**

(74) Vertreter: **Geske, Kerstin**
  **Volkswagen AG**
  **Patentabteilung EZP**
  **Postfach 1770**
  **38436 Wolfsburg (DE)**

(56) Entgegenhaltungen:
**EP-A1- 1 519 204    WO-A-03/048802
DE-A- 10 050 278    GB-A- 2 334 398
US-A- 5 963 163**

EP 1 680 688 B1

**Beschreibung**

Die Erfindung betrifft eine Messeinrichtung, insbesondere eine Messeinrichtung für ein Kraftfahrzeug, zum Messen eines Abstandes zwischen der Messeinrichtung und mindestens einem Objekt und/oder zum Messen einer Geschwindigkeitsdifferenz zwischen der Messeinrichtung und dem mindestens einen Objekt, wobei die Messeinrichtung eine Abstrahlvorrichtung zum Senden eines Sendesignals aufweist, das zumindest zwei Signalabschnittsfolgen, eine erste Signalabschnittsfolge und eine zweite Signalabschnittsfolge, mit zumindest je zwei zeitlich alternierenden Signalabschnitten umfasst, wobei sich die zumindest zwei Signalabschnitte einer Signalabschnittsfolge in ihrer Frequenz um je eine Differenzfrequenz unterscheiden.

Eine derartige als Radareinrichtung ausgestaltete Messeinrichtung ist aus der DE 100 50 278 A1 bzw, aus der Dissertation von M.-M. Meinecke "Zum optimierten Sendesignalentwurf für Automobilradare", TU Hamburg-Harburg, 2001 bekannt. So offenbart die DE 100 50 278 A1 die Bestimmung eines Abstandes und einer Relativgeschwindigkeit wenigstens eines entfernten Objekts von einem Beobachtungspunkt mit Hilfe von vom Beobachtungspunkt ausgesandten elektromagnetischen Signalen in Form von abwechselnd ausgesandten Signalabschnitten einer ersten Frequenz und einer zweiten Frequenz, die nach einer Reflexion an dem Objekt empfangen und ausgewertet werden, wobei die Signalabschnitte der beiden Frequenzen während eines Messintervalls um jeweils einen konstanten Frequenzschritt verschoben ausgesandt werden.

Der Einsatz einer Radareinrichtung im Automobilbereich ist zudem aus der Dissertation "Radarsysteme zur automatischen Abstandsregelung in Automobilen" von R. Mende, Technische Universität Carolo-Wilhelmina zu Braunschweig, 1999, sowie aus der DE 199 22 411 A1, der DE 42 44 608 C2 und der DE 100 25 844 A1 bekannt.

Die DE 199 22 411 A1 offenbart ein CW-Radarverfahren (Continuous Wave Radarverfahren bzw. Dauerstrich-Radarverfahren) zur Messung von Abständen und Relativgeschwindigkeiten zwischen einem Fahrzeug und einem oder mehreren Hindernissen, bei denen ein Sendesignal aus mindestens vier aufeinander folgenden Blöcken mit jeweils unterschiedlichen Steigungen besteht. In einem Entfernungs-Relativgeschwindigkeits-Diagramm werden zunächst die Schnittpunkte aller Geraden aus zwei Blöcken von allen gefundenen Frequenzpositionen berechnet. Zur Validierung dieser Schnittpunkte werden diese dahingehend überprüft, ob im Fourierspektrum eines dritten Blocks ein Peak an einer Frequenzposition existiert, deren zugeordnete Gerade im Entfernungs-Relativgeschwindigkeits-Diagramm einen Umgebungsbereich des Schnittpunktes schneidet. Die derart validierten Schnittpunkte werden einer zweiten Bedingung unterworfen, ob im Fourierspektrum eines vierten Blocks ein Peak an einer Frequenzposition existiert, deren zugeordnete Gerade im Entfernungs-Relativgeschwindigkeits-Diagramm einen Umgebungsbereich des Schnittpunktes schneidet. Die Schnittpunkte werden dann als gültig betrachtet, wenn sie beide Bedingungen erfüllen.

Die DE 42 44 608 C2 offenbart ein Radarverfahren zur Messung von Abständen und Relativgeschwindigkeiten zwischen einem Fahrzeug und vor diesem befindlichen Hindernissen, mit Aussendung kontinuierlicher Sendesignale, während des Aussendens der kontinuierlichen Sendesignale gleichzeitiges Empfangen an den Hindernissen reflektierter Signale, Mischen der reflektierten Signale mit den kontinuierlichen Sendesignalen zur Gewinnung von Inphase- und Quadratur-Signalen und Verarbeitung dieser Signale zu Ausgangssignalen für die Abstände und Relativgeschwindigkeiten der Hindernisse, wobei die kontinuierlichen Sendesignale in frequenzkonstante Stufen zeitlich konstanter Länge ohne zeitlichen Abstand zueinander zerlegt sind und zu jeder frequenzkonstanten Stufe des reflektierten empfangenen Signals ein komplexer Abtastwert erfasst und mit dem Sendesignal der gleichen frequenzkonstanten Stufe gemischt wird.

Die DE 100 25 844 A1 offenbart ein stufenweise linear frequenzmoduliertes Sendesignal, wobei mindestens zwei stufenweise lineare frequenzmodulierte Rampen ineinander verwoben sind. Charakteristisch dabei ist, dass diese zwei oder mehr Rampen gegeneinander einen konstanten Frequenzversatz aufweisen. Aus den Empfangssignalen können durch Frequenzmessung und Differenzphasenmessung eindeutig Objektentfernung und Objektgeschwindigkeit berechnet werden.

Zudem ist aus der DE 43 31 440 A1 bekannt, für Radareinrichtung I/Q-Signalpaare für die Signalauswertung zu bilden, wobei zwischen einer Radarantenne und einem Radarfrontend ein Phasenschieber geschaltet ist, wobei eine Auswerteschaltung eingangsseitig zwei Signalkanäle aufweist, wobei das Radarfrontend über einen Kanalumschalter mit jeweils einem der beiden Signalkanäle verbindbar ist, wobei der Phasenschieber und der Kanalumschalter synchron getaktet sind, und wobei der Phasenschieber mit jedem Takt die Phase zwischen 0° und 45° umschaltet.

Aus der DE 689 13 423 T2 ist eine Doppler-Radareinrichtung für ein Fahrzeug zum Anzeigen eines Abstands zwischen dem Fahrzeug und einem Hindernis bekannt.

Aus der GB 2 334 398 A ist eine Radareinrichtung bekannt die mehrere Signalabschnittsfolgen aussenden kann, wobei die Differenzfrequenz zwischen die Signalabschnitte einer ersten Signalabschnittsfolge von die einer zweiten Signalabschnittsfolge verschieden sein kann.

Es ist Aufgabe der Erfindung, eine Messeinrichtung mit einer gegenüber der DE 100 50 278 A1 verbesserten Messgenauigkeit anzugeben. Dabei ist es wünschenswert, mittels der Messeinrichtung das Auftreten so genannter Geisterziele gering zu halten oder ganz zu unterbinden, eine Messzeit von weniger als 10ms zu ermöglichen und die Detektion von Objekten im sehr nahen Bereich (0m ... 1 m) wie auch im Mittel- und Fernbereich zu ermöglichen.

Vorgenannte Aufgabe wird durch eine Messeinrichtung, insbesondere eine Messeinrichtung für ein Kraftfahrzeug, zum Messen eines Abstandes zwischen der Messeinrichtung und mindestens einem Objekt und/oder zum Messen einer Geschwindigkeitsdifferenz zwischen der Messeinrichtung und dem mindestens einen Objekt gemäß Anspruch 1 gelöst, wobei die Messeinrichtung eine Abstrahlvorrichtung zum Senden eines Sendesignals aufweist, das zumindest zwei Signalabschnittsfolgen, eine erste Signalabschnittsfolge und eine zweite Signalabschnittsfolge, mit zumindest je zwei zeitlich alternierenden Signalabschnitten umfasst, wobei sich zumindest zwei Signalabschnitte einer Signalabschnittsfolge in ihrer Frequenz um je eine Differenzfrequenz unterscheiden, wobei die Differenzfrequenz der ersten Signalabschnittsfolge von der Differenzfrequenz der zweiten Signalabschnittsfolge, insbesondere um mindestens 5%, vorteilhafterweise um mindestens 10%, verschieden ist.

In vorteilhafter Ausgestaltung der Erfindung weist die Messeinrichtung eine Empfangseinrichtung zum Empfangen eines von dem mindestens einem Objekt reflektierten Reflexionssignals des Sendesignals und vorteilhafterweise einen Mischer zum Mischen der ersten Signalabschnittsfolge mit einem von dem mindestens einen Objekt reflektierten Anteil der ersten Signalabschnittsfolge zu einem ersten Mischsignal auf. In weiterhin vorteilhafter Ausgestaltung der Erfindung weist die Messeinrichtung zudem eine Auswertevorrichtung zur Ermittlung der Frequenz oder den Frequenzen des ersten Mischsignals auf. Die Auswertung kann beispielsweise mittels einer FFT (Fast Fourier Transformation) erfolgen.

In weiterhin vorteilhafter Ausgestaltung der Erfindung ist mittels der Auswertevorrichtung der Abstand zwischen der Messeinrichtung und dem mindestens einen Objekt und/oder die Geschwindigkeitsdifferenz zwischen der Messeinrichtung und dem mindestens einen Objekt in Abhängigkeit der gemessenen Frequenzen des ersten Mischsignals bestimmbar.

In weiterhin vorteilhafter Ausgestaltung der Erfindung ist mittels des Mischers die zweite Signalabschnittsfolge mit einem von dem mindestens einem Objekt reflektierten Anteil der zweiten Signalabschnittsfolge zu einem zweiten Mischsignal mischbar und mittels der Auswertevorrichtung die gemessenen Frequenzen des zweiten Mischsignals ermittelbar.

In weiterhin vorteilhafter Ausgestaltung der Erfindung ist mittels der Auswertevorrichtung der Abstand zwischen der Messeinrichtung und dem mindestens einen Objekt und/oder die Geschwindigkeitsdifferenz zwischen der Messeinrichtung und dem mindestens einen Objekt in Abhängigkeit von den gemessenen Frequenzen des ersten Mischsignals und von den gemessenen Frequenzen des zweiten Mischsignals bestimmbar.

In weiterhin vorteilhafter Ausgestaltung der Erfindung ist mittels der Auswertevorrichtung die Differenz der absoluten Phase des ersten Mischsignals und der absoluten Phase des zweiten Mischsignals bestimmbar.

In weiterhin vorteilhafter Ausgestaltung der Erfindung ist mittels der Auswertevorrichtung der Abstand zwischen der Messeinrichtung und dem mindestens einen Objekt und/oder die Geschwindigkeitsdifferenz zwischen der Messeinrichtung und dem mindestens einem Objekt in Abhängigkeit der Differenz der Phase des ersten Mischsignals und der Phase des zweiten Mischsignals bestimmbar.

In weiterhin vorteilhafter Ausgestaltung der Erfindung sind die Abstrahlvorrichtung und die Empfangseinrichtung je eine Antenne. Die Abstrahlvorrichtung und die Empfangseinrichtung können jedoch auch mittels einer gemeinsamen Antenne implementiert werden.

In weiterhin vorteilhafter Ausgestaltung der Erfindung ist die Abstrahlvorrichtung ein optisches Element, insbesondere ein Laser. Die Empfangseinrichtung ist dabei in weiterhin vorteilhafter Ausgestaltung der Erfindung ein lichtempfindliches Element, insbesondere ein Photoelement oder eine Photodiode, welches zur Phasenmessung des reflektierten Laser-Lichtes geeignet ist.

Vorgenannte Aufgabe wird zudem durch ein Verfahren zum Messen eines Abstandes zwischen einer Abstrahlvorrichtung und mindestens einem Objekt und/oder zum Messen einer Geschwindigkeitsdifferenz zwischen der Abstrahlvorrichtung und dem mindestens einen Objekt gemäß Anspruch 14 gelöst, wobei mittels der Abstrahlvorrichtung ein Sendesignal mit zumindest zwei Signalabschnittsfolgen, einer ersten Signalabschnittsfolge und einer zweiten Signalabschnittsfolge, mit zumindest je zwei zeitlich alternierenden Signalabschnitten gesendet wird, wobei sich zumindest zwei Signalabschnitte einer Signalabschnittsfolge in ihrer Frequenz um je eine nicht konstante Differenzfrequenz unterscheiden. Die Differenzfrequenz der ersten Signalabschnittsfolge kann von der Differenzfrequenz der zweiten Signalabschnittsfolge, insbesondere um mindestens 5%, vorteilhafterweise um mindestens 10%, verschieden sein.

In weiterhin vorteilhafter Ausgestaltung der Erfindung wird ein von dem mindestens einen Objekt reflektiertes Reflexionssignal des Sendesignals empfangen, vorteilhafterweise die erste Signalabschnittsfolge mit einem von dem mindestens einen Objekt reflektierten Anteil der ersten Signalabschnittsfolge zu einem ersten Mischsignal gemischt und vorteilhafterweise die dominierenden (gemessenen) Frequenzen des ersten Mischsignals ermittelt.

In weiterhin vorteilhafter Ausgestaltung der Erfindung wird der Abstand zwischen der Abstrahlvorrichtung und dem mindestens einen Objekt und/oder die Geschwindigkeitsdifferenz zwischen der Abstrahlvorrichtung und dem mindestens einen Objekt in Abhängigkeit der dominierenden Frequenzen des ersten Mischsignals bestimmt.

In weiterhin vorteilhafter Ausgestaltung der Erfindung wird die zweite Signalabschnittsfolge mit einem von dem mindestens einen Objekt reflektierten Anteil der zweiten Signalabschnittsfolge zu einem zweiten Mischsignal gemischt und in weiterhin vorteilhafter Ausgestaltung der Erfindung die dominierenden Frequenzen des zweiten Mischsignals ermittelt.

In weiterhin vorteilhafter Ausgestaltung der Erfindung wird der Abstand zwischen der Abstrahlvorrichtung und dem mindestens einen Objekt und/oder die Geschwindigkeitsdifferenz zwischen der Abstrahlvorrichtung und dem mindestens einen Objekt in Abhängigkeit der dominierenden Frequenzen des ersten Mischsignals und der dominierenden Frequenzen des zweiten Mischsignals bestimmt.

In weiterhin vorteilhafter Ausgestaltung der Erfindung wird die Differenz der Phase des ersten Mischsignals und der Phase des zweiten Mischsignals bestimmt und in weiterhin vorteilhafter Ausgestaltung der Erfindung der Abstand zwischen der Abstrahlvorrichtung und dem mindestens einen Objekt und/oder die Geschwindigkeitsdifferenz zwischen der Abstrahlvorrichtung und dem mindestens einen Objekt in Abhängigkeit der Differenzen den Phasen des ersten Mischsignals und den Phasen des zweiten Mischsignals bestimmt.

Kraftfahrzeug im Sinne der Erfindung ist insbesondere ein individuell im Straßenverkehr benutzbares Landfahrzeug. Kraftfahrzeuge im Sinne der Erfindung sind insbesondere nicht auf Landfahrzeuge mit Verbrennungsmotor beschränkt.

Weitere Vorteile und Einzelheiten ergeben sich aus der nachfolgenden Beschreibung von Ausführungsbeispielen. Dabei zeigen:

Fig. 1     eine Vorderansicht eines Kraftfahrzeugs,
Fig. 2     eine Seitenansicht eines Kraftfahrzeugs,
Fig. 3     ein Ausführungsbeispiel für eine Radareinrichtung,
Fig. 4     ein Ausführungsbeispiel für ein Frequenz-Zeit-Diagramm und
Fig. 5     ein Ausführungsbeispiel für eine optische Messeinrichtung.

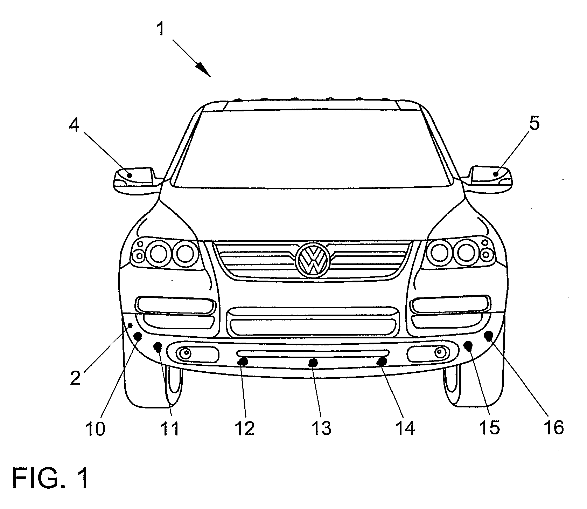

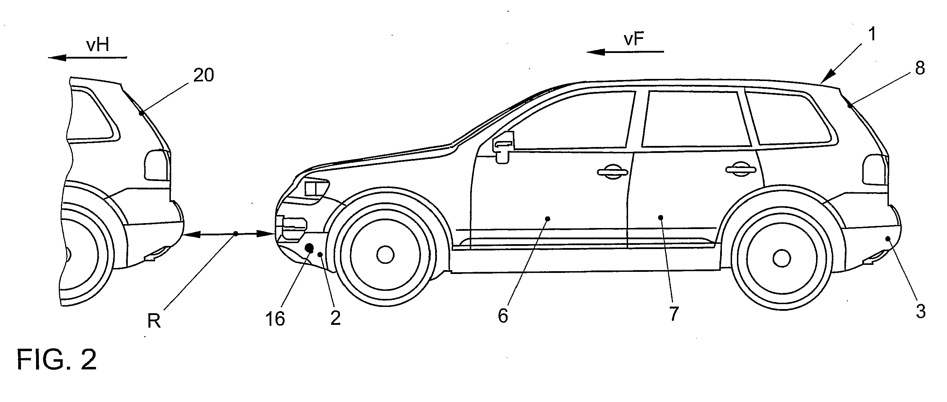

Fig. 1 und Fig. 2 zeigen ein Kraftfahrzeug 1 in beispielhafter Ausgestaltung. Fig. 1 zeigt dabei eine Vorderansicht des Kraftfahrzeugs 1, und Fig. 2 zeigt eine Seitenansicht des Kraftfahrzeugs 1. Das Kraftfahrzeug 1 weist einen vorderen Stoßfänger 2 und einen hinteren Stoßfänger 3 auf. Der vordere Stoßfänger 2 weist in beispielhafter Ausgestaltung Abstands- und/oder Geschwindigkeitssensoren 10, 11, 12, 13, 14, 15, 16 zum Messen eines Abstandes R zwischen dem Kraftfahrzeug 1 und mindestens einem Objekt bzw. Hindernis 20, wie etwa einem anderen Kraftfahrzeug, und/oder zum Messen einer Geschwindigkeitsdifferenz v zwischen dem Kraftfahrzeug 1 und dem mindestens einen Objekt bzw. Hindernis 20 auf, wobei die Geschwindigkeitsdifferenz v die Differenz der Geschwindigkeit vH des Hindernisses 20 und der Geschwindigkeit vF des Kraftfahrzeugs 1 ist.

Es können je nach Anwendung der Abstands- und/oder Geschwindigkeitssensoren 10, 11, 12, 13, 14, 15, 16 mehr oder weniger Abstands- und/oder Geschwindigkeitssensoren am Stoßfänger 2 angeordnet sein. Dies bedeutet, dass auch nur ein Sensor zum Einsatz kommen kann. Es können alternativ oder zusätzlich auch Abstands- und/oder Geschwindigkeitssensoren an dem hinteren Stoßfänger 3, an Seitenspiegeln 4, 5, an Seitentüren 6, 7, den A-, B-, C-Säulen und/oder an einer Heckklappe 8 angeordnet sein. Die Abstands- und/oder Geschwindigkeitssensoren können in verschiedene Richtungen und/oder in verschiedene Höhen ausgerichtet sein. Anwendungsbeispiele derartiger Abstands- und/oder Geschwindigkeitssensoren können der Dissertation "Radarsysteme zur automatischen Abstandsregelung in Automobilen" von R. Mende, Technische Universität Carolo-Wilhelmina zu Braunschweig, 1999 entnommen werden.

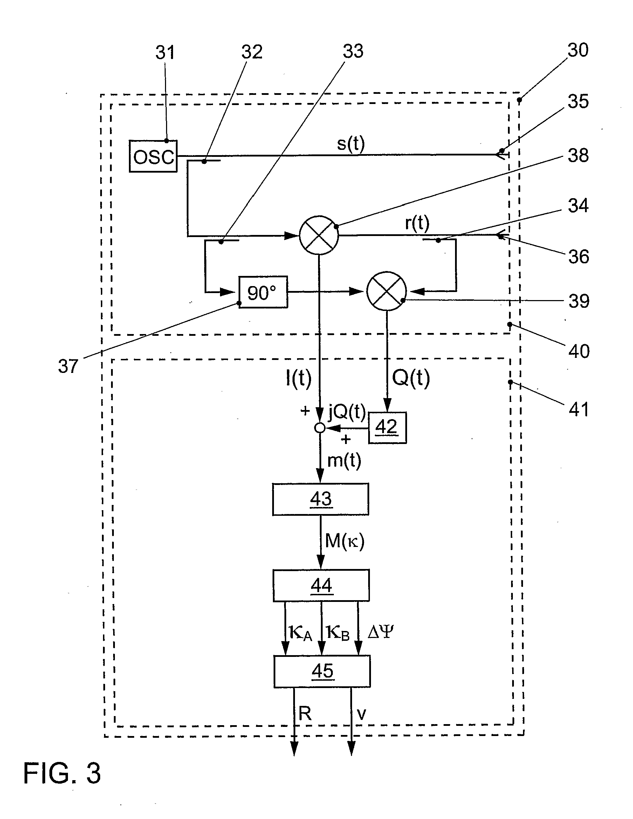

Fig. 3 zeigt eine Radareinrichtung 30, die z.B. als Abstands- und/oder Geschwindigkeitssensor 10, 11, 12, 13, 14, 15, 16 verwendbar ist. Die Radareinrichtung 30 weist einen Radarsensor 40 und eine Auswertevorrichtung 41 auf. Die Radareinrichtung 30 weist einen Oszillator bzw. einen Signalgenerator 31 zur Erzeugung eines Sendesignals s(t), eine Sendeantenne 35 zur Abstrahlung des Sendesignals s(t) und eine Empfangsantenne 36 zum Empfang eines von einem Objekt wie dem Hindernis 20 reflektierten Reflexionssignals r(t) des abgestrahlten Sendesignals s(t) auf. t bezeichnet dabei die Zeit.

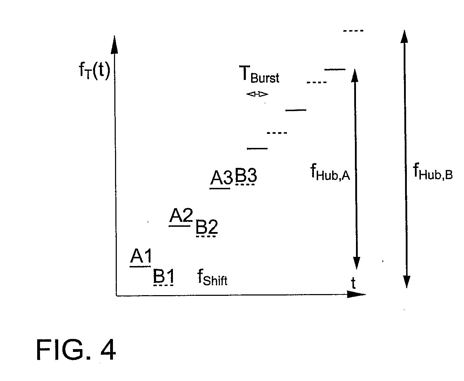

Das mittels des Signalgenerators 31 erzeugte Sendesignal s(t) umfasst zumindest zwei Signalabschnittsfolgen, eine erste Signalabschnittsfolge und eine zweite Signalabschnittsfolge, mit zumindest je zwei zeitlich alternierenden Signalabschnitten, wobei sich die zumindest zwei Signalabschnitte einer Signalabschnittsfolge in ihrer Frequenz um je eine Differenzfrequenz unterscheiden, und wobei die Differenzfrequenz der ersten Signalabschnittsfolge von der Differenzfrequenz der zweiten Signalabschnittsfolge, insbesondere um mindestens 5%, vorteilhafterweise um mindestens 10%, verschieden ist. Ein Ausführungsbeispiel eines derartigen Sendesignals ist in Fig. 4 in einem Frequenz-Zeit-Diagramm dargestellt.

Dabei bezeichnen A1, A2, A3, ... die Signalabschnitte einer ersten Signalabschnittsfolge A(t) und B1, B2, B3, ... die Signalabschnitte einer zweiten Signalabschnittsfolge B(t). Derartige Signalabschnitte werden auch als Chirps bezeichnet. Im vorliegenden Ausführungsbeispiel sind die Zeitdauern $T_{Burst}$ für die Signalabschnitte A1, A2, A3, ... und B1, B2, B3, ... gleich lang. Die Zeitdauern $T_{Burst}$ der Signalabschnitte A1, A2, A3, ... sind in Fig. 4 durch eine durchgezogene Linie und die Zeitdauern $T_{Burst}$ der Signalabschnitte B1, B2, B3, ... durch eine unterbrochene Linie dargestellt.

Die Frequenz innerhalb eines Signalabschnitts A1, A2, A3, ... bzw. B1, B2, B3, ... kann eine konstante Trägerfrequenz $f_T(t)$ sein, sie kann aber auch eine mit einer Modulationsfrequenz modulierte konstante Trägerfrequenz $f_T(t)$ sein.

Die einzelnen Signalabschnitte A1, A2, A3, ... der ersten Signalabschnittsfolge A(t) unterscheiden sich in ihrer Frequenz bzw. ihrer Trägerfrequenz $f_T(t)$ um je eine Differenzfrequenz $f_{Hub,A}/(N-1)$, wobei $f_{Hub,A}$ die Differenz zwischen der Trägerfrequenz des ersten Signalabschnitts A1 der ersten Signalabschnittsfolge A(t) und der Trägerfrequenz des N-ten Signalabschnitts der ersten Signalabschnittsfolge A(t) und N die Anzahl der Signalabschnitte A1, A2, A3, ... der ersten Signalabschnittsfolge A(t) ist. Die einzelnen Signalabschnitte B1, B2, B3, ... der ersten Signalabschnittsfolge B(t) unterscheiden sich in ihrer Frequenz bzw. ihrer Trägerfrequenz $f_T(t)$ um je eine Differenzfrequenz $f_{Hub,B}/(N-1)$, wobei $f_{Hub,B}$ die Differenz zwischen der Trägerfrequenz des ersten Signalabschnitts B1 der zweiten Signalabschnittsfolge B(t) und der Trägerfrequenz des N-ten Signalabschnitts der zweiten Signalabschnittsfolge B(t) und N ebenfalls die Anzahl der Signalabschnitte B1, B2, B3, ... der ersten Signalabschnittsfolge B(t) ist. Es hat sich überraschenderweise als besonders vorteilhaft erwiesen, die Differenzfrequenz $f_{Hub,A}/(N-1)$ und der ersten Signalabschnittsfolge A(t), insbesondere um mindestens 5%, vorteilhafterweise um mindestens 10%, verschieden von der Differenzfrequenz $f_{Hub,B}/(N-1)$ der zweiten Signalabschnittsfolge B(t) zu wählen.

Es kann zudem ein Frequenzversatz $f_{Shift}$ zwischen dem Signalabschnitt A1 der ersten Signalabschnittsfolge A(t) und dem Signalabschnitt B1 der zweiten Signalabschnittsfolge B(t) vorgesehen werden.

Entsprechend ergibt sich die erste Signalabschnittsfolge A(t) zu

$$A(t) = \sum_{n=0}^{N-1} \cos\left(2\pi \cdot \left(f_{TA1} + \frac{n}{N-1} \cdot f_{Hub,A}\right) \cdot t\right) \cdot \mathrm{rect}\left(\frac{t}{T_{Burst}} - \frac{1}{2} - 2n\right)$$

und die zweite Signalabschnittsfolge B(t) zu

$$B(t) = \sum_{n=0}^{N-1} \cos\left(2\pi \cdot \left(f_{TA1} + f_{Shift} + \frac{n}{N-1} \cdot f_{Hub,B}\right) \cdot t\right) \cdot \mathrm{rect}\left(\frac{t}{T_{Burst}} - \frac{1}{2} - (2n+1)\right)$$

wobei $f_{TA1}$ die Trägerfrequenz des Signalabschnitts A1 und rect die Rechteckfunktion bezeichnet.

Das Sendesignal s(t) ergibt sich damit zu

$$s(t) = A(t) + B(t)$$

Das Sendesignal s(t) wird mittels eines Kopplers 32 einem Mischer 38 zum Mischen des Sendesignals s(t) und des Reflexionssignals r(t) zugeleitet. Der Mischer 38 gibt ein Inphase-Signal I(t) aus.

Das Sendesignal s(t) wird zudem mittels eines weiteren Kopplers 33 einem Phasenschieber 37 zugeleitet, mittels dessen die Phase des Sendesignals s(t) bezogen auf die Trägerfrequenz um 90° also π/2 verschoben wird. Das phasenverschobene Sendesignal wird einem Mischer 39 zum Mischen des phasenverschobenen Sendesignals und des Reflexionssignals r(t) zugeleitet, das dem Mischer 39 mittels eines Kopplers 34 zugeleitet wird. Der Mischer 39 gibt ein Quadratur-Signal Q(t) aus.

Das Inphase-Signal I(t) und das Quadratur-Signal Q(t) sind Mischsignale im Sinne der Ansprüche.

Die Radareinrichtung 30 weist einen Multiplikator 42 auf, mittels dessen das Quadratur-Signal Q(t) mit der komplexen Zahl j zu jQ(t) multipliziert wird. I(t) und jQ(t) werden zu einem komplexen Mischsignal m(t) addiert. Das komplexe Mischsignal m(t) ist ebenfalls ein Mischsignal im Sinne der Ansprüche. Die Radareinrichtung 30 weist zudem einen Frequenzanalysator 43, auf mittels dessen ein Spektrum M(κ) des komplexen Mischsignals m(t) über die Frequenz κ gebildet wird. Mittels eines Detektors 44 werden die dominierende Frequenz $κ_A$ des Mischsignals m(t) in Bezug auf die erste Signalabschnittsfolge A(t) und die dominierende Frequenz $κ_B$ des Mischsignals m(t) in Bezug auf die zweite Signalabschnittsfolge B(t) ermittelt.

Die Verarbeitung der einzelnen Signalabschnittsfolgen A(t) und B(t) erfolgt dabei vorteilhafterweise durch zeitliche Trennung separat, so dass mittels der Mischer 38 und 39 die erste Signalabschnittsfolge A(t) mit einem von dem mindestens einen Objekt 20 reflektierten Anteil der ersten Signalabschnittsfolge A(t) (des Reflexionssignals r(t)) zu einem ersten Mischsignal $I_A(t)$, $Q_A(t)$ bzw. $m_A(t)$ und die zweite Signalabschnittsfolge B(t) mit einem von dem mindestens einen Objekt 20 reflektierten Anteil der zweiten Signalabschnittsfolge B(t) (des Reflexionssignals r(t)) zu einem zweiten Mischsignal $I_B(t)$, $Q_B(t)$ bzw. $m_B(t)$ gemischt wird. Mittels des Frequenzanalysators 43 wird dabei ein komplexes Spektrum

$M_A(\kappa)$ des komplexen Mischsignals $m_A(t)$ über die Frequenz $\kappa$ und ein komplexes Spektrum $M_B(\kappa)$ des komplexen Mischsignals $m_B(t)$ über die Frequenz $\kappa$ gebildet. Mittels des Detektors 44 werden die Frequenzen $\kappa_A$ des komplexen Mischsignals $m_A(t)$ (also in Bezug auf die erste Signalabschnittsfolge A(t)) und die Frequenzen $\kappa_B$ des komplexen Mischsignals $m_B(t)$ (also in Bezug auf die zweite Signalabschnittsfolge B(t)) ermittelt.

Die Radareinrichtung 30 weist einen Auswerter 45 zur Bestimmung des Abstandes R und/oder der Differenzgeschwindigkeit v auf. Dabei wird mittels des Auswerters 45 folgendes Gleichungssystem gelöst:

$$\kappa_A = \frac{2v \cdot f_T}{c} \cdot (N-1) \cdot T_{Burst} - \frac{2R}{c} \cdot f_{Hub,A}$$

$$\kappa_B = \frac{2v \cdot f_T}{c} \cdot (N-1) \cdot T_{Burst} - \frac{2R}{c} \cdot f_{Hub,B}$$

wobei c die Lichtgeschwindigkeit ist.

Es kann zudem vorgesehen werden, dass mittels des Detektors 44 zusätzlich die Differenz $\Delta\psi$ der Phase des komplexen Mischsignals $m_A(t)$ und der Phase des komplexen Mischsignals $m_B(t)$ ermittelt wird. In diesem Fall kann mittels des Auswerters 45 - zur Bestimmung des Abstandes R und/oder der Geschwindigkeitsdifferenz v - folgendes überbestimmtes Gleichungssystem, z.B. durch einen Least-Square-Algorithmus, gelöst werden:

$$\Delta\psi = -2\pi \cdot \left( \frac{2v \cdot f_T \cdot T_{Burst}}{c} + \frac{2R \cdot f_{Shift}}{c} \right)$$

$$\kappa_A = \frac{2v \cdot f_T}{c} \cdot (N-1) \cdot T_{Burst} - \frac{2R}{c} \cdot f_{Hub,A}$$

$$\kappa_B = \frac{2v \cdot f_T}{c} \cdot (N-1) \cdot T_{Burst} - \frac{2R}{c} \cdot f_{Hub,B}$$

Es kann zudem vorgesehen werden, mehr als zwei Signalabschnittsfolgen zu verwenden. So können z.B. drei Signalabschnittsfolgen A(t), B(t) und C(t) unterschiedlicher Differenzfrequenz $f_{Hub,A}/(N-1)$, $f_{hub,B}/(N-1)$ und $f_{Hub,c}/(N-1)$ verwendet und entsprechend abgestrahlt und verarbeitet werden. In diesem Fall kann mittels des Auswerters 45 - zur Bestimmung des Abstandes R und/oder der Geschwindigkeitsdifferenz v - z.B. folgendes überbestimmtes Gleichungssystem, z.B. durch einen Least-Square-Algorithmus, gelöst werden:

$$\kappa_A = \frac{2v \cdot f_T}{c} \cdot (N-1) \cdot T_{Burst} - \frac{2R}{c} \cdot f_{Hub,A}$$

$$\kappa_B = \frac{2v \cdot f_T}{c} \cdot (N-1) \cdot T_{Burst} - \frac{2R}{c} \cdot f_{Hub,B}$$

$$\kappa_C = \frac{2v \cdot f_T}{c} \cdot (N-1) \cdot T_{Burst} - \frac{2R}{c} \cdot f_{Hub,C}$$

$$\Delta\psi_{AB} = -2\pi \cdot \left( \frac{2v \cdot f_T \cdot T_{Burst}}{c} + 2R \cdot \frac{f_{T,B} - f_{T,A}}{c} \right) \quad \text{wobei} \quad f_{T,B} - f_{T,A} =: f_{Shift,BA}$$

$$\Delta\psi_{AC} = -2\pi \cdot \left( \frac{2v \cdot f_T \cdot T_{Burst}}{c} + 2R \cdot \frac{f_{T,C} - f_{T,A}}{c} \right) \text{ wobei } \quad f_{T,C} - f_{T,A} =: f_{Shift,CA}$$

Entsprechend kann vorgesehen werden, z.B. vier Signalabschnittsfolgen A(t), B(t), C(t) und D(t) unterschiedlicher Differenzfrequenz $f_{Hub,A}$/(N-1), $f_{Hub,B}$/(N-1), $f_{Hub,C}$/(N-1) und $f_{Hub,D}$/(N-1) zu verwenden und entsprechend abzustrahlen und zu verarbeiten. In diesem Fall kann mittels des Auswerters 45 - zur Bestimmung des Abstandes R und/oder der Geschwindigkeitsdifferenz v - z.B. folgendes überbestimmtes Gleichungssystem, z.B. durch einen Least-Square-Algorithmus, gelöst werden:

$$\kappa_A = \frac{2v \cdot f_T}{c} \cdot (N-1) \cdot T_{Burst} - \frac{2R}{c} \cdot f_{Hub,A}$$

$$\kappa_B = \frac{2v \cdot f_T}{c} \cdot (N-1) \cdot T_{Burst} - \frac{2R}{c} \cdot f_{Hub,B}$$

$$\kappa_C = \frac{2v \cdot f_T}{c} \cdot (N-1) \cdot T_{Burst} - \frac{2R}{c} \cdot f_{Hub,C}$$

$$\kappa_D = \frac{2v \cdot f_T}{c} \cdot (N-1) \cdot T_{Burst} - \frac{2R}{c} \cdot f_{Hub,D}$$

$$\Delta\psi_{AB} = \text{siehe oben}$$

$$\Delta\psi_{AC} = \text{siehe oben}$$

$$\Delta\psi_{AD} = -2\pi \cdot \left( \frac{2v \cdot f_T \cdot T_{Burst}}{c} + 2R \cdot \frac{f_{T,D} - f_{T,A}}{c} \right) \text{ wobei } \quad f_{T,D} - f_{T,A} =: f_{Shift,DA}$$

Darüber hinaus kann für die Signalabschnitte verschiedener Signalabschnittsfolgen eine unterschiedliche Zeitdauer vorgesehen sein.

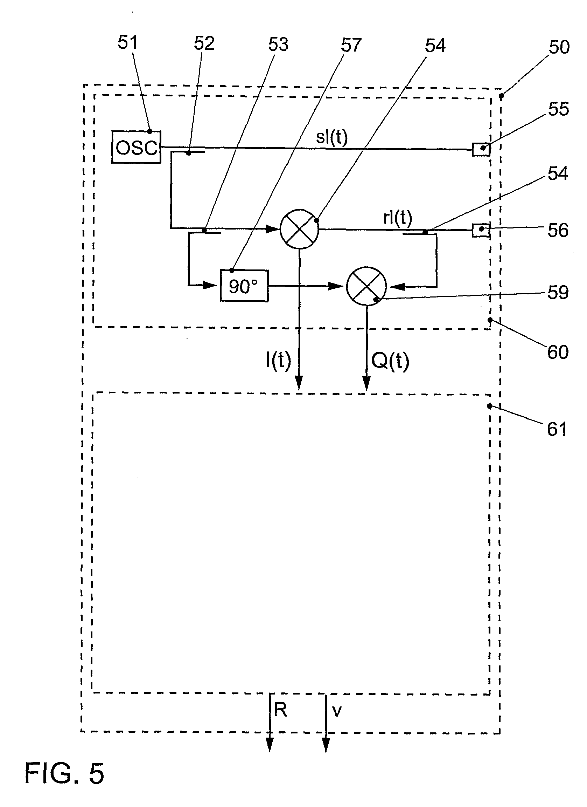

Fig. 5 zeigt ein Ausführungsbeispiel für eine optische Messeinrichtung 50 zur verbesserten Messung der Geschwindigkeitsdifferenz v bzw. des Abstandes R. Die optische Messeinrichtung 50 weist einen optischen Sensor 60 und eine Auswertevorrichtung 61 auf, die im wesentlichen der Auswertevorrichtung 41 entspricht. Die optische Messeinrichtung 50 weist einen Oszillator bzw. einen Signalgenerator 51 zur Erzeugung eines Sendesignals sl(t), einen Laser 55 zur Abstrahlung von Licht mit der Frequenz des Sendesignals sl(t) und eine Photoelement 56 zum Empfang eines von mindestens einem Objekt wie dem Hindernis 20 reflektierten Lichts und zur Erzeugung eines Reflexionssignals rl(t) mit einer Frequenz auf, die der Frequenz des reflektierten Lichts entspricht. Das mittels des Signalgenerators 51 erzeugte Sendesignal sl(t) entspricht dem Sendesignal s(t), ist jedoch in einem anderen Frequenzbereich angeordnet. Das Sendesignal sl(t) wird mittels eines Kopplers 52 einem Mischer 58 zum Mischen des Sendesignals sl(t) und des Reflexionssignals rl(t) zugeleitet. Der Mischer 58 gibt ein Inphase-Signal I(t) aus.

Das Sendesignal sl(t) wird zudem mittels eines weiteren Kopplers 53 einem Phasenschieber 57 zugeleitet, mittels dessen die Phase des Sendesignals sl(t) bezogen auf die Trägerfrequenz um 90° also π/2 verschoben wird. Das phasenverschobene Sendesignal wird einem Mischer 59 zum Mischen des phasenverschobenen Sendesignals und des Reflexionssignals rl(t) zugeleitet, das dem Mischer 59 mittels eines Kopplers 54 zugeleitet wird. Der Mischer 59 gibt ein Quadratur-Signal Q(t) aus.

Die Elemente, Signale und Frequenzbereiche in den Figuren sind unter Berücksichtigung von Einfachheit und Klarheit und nicht notwendigerweise maßstabsgetreu gezeichnet. So sind z.B. die Größenordnungen einiger Elemente, Signale bzw. Frequenzbereiche übertrieben dargestellt, um das Verständnis der Ausführungsbeispiele der vorliegenden Erfindung zu verbessern.

**BEZUGSZEICHENLISTE**

| | |
|---|---|
| 1 | Kraftfahrzeug |
| 2, 3 | Stoßfänger |
| 4, 5 | Seitenspiegel |
| 6, 7 | Seitentür |
| 8 | Heckklappe |
| 10, 11, 12, 13, 14, 15, 16 | Abstands- und/oder Geschwindigkeitssensor |
| 20 | Objekt bzw. Hindernis |
| 30 | Radareinrichtung |
| 31, 51 | Signalgenerator |
| 32, 33, 34, 52, 53, 54 | Koppler |
| 35 | Sendeantenne |
| 36 | Empfangsantenne |
| 37,57 | Phasenschieber |
| 38, 39, 58, 89 | Mischer |
| 40 | Radareinrichtung |
| 41,61 | Auswertevorrichtung |
| 42 | Multiplikator |
| 43 | Frequenzanalysator |
| 44 | Detektor |
| 45 | Auswerter |
| 50 | optische Messeinrichtung |
| 55 | Laser |
| 56 | Photoelement |
| 60 | optischer Sensor |
| A, B | Signalabschnittsfolge |
| A1, A2, A3, B1, B2, B3 | Signalabschnitt |
| $f_{Hub,A}$, $f_{Hub,B}$ | Differenz zwischen der Trägerfrequenz des ersten Signalabschnitts einer Signalabschnittsfolge und der Trägerfrequenz des letzten Signalabschnitts der Signalabschnittsfolge |
| $f_{Shift}$ | Frequenzversatz |
| $f_T(t)$ | Trägerfrequenz |
| I(t) | Inphase-Signal |
| m(t) | komplexes Mischsignal |
| $M(\kappa)$ | komplexes Spektrum |
| Q(t) | Quadratur-Signal |
| R | Abstand |
| r(t), rl(t) | Reflexionssignal |
| s(t), sl(t) | Sendesignal |
| t | Zeit |
| $T_{Burst}$ | Zeitdauer |
| v | Geschwindigkeitsdifferenz |
| vF | Geschwindigkeit des Kraftfahrzeugs |
| vH | Geschwindigkeit des Hindernisses |
| $\Delta\psi$ | Differenz der Phase zweier Mischsignale |
| $\kappa$ | Frequenz |
| $\kappa_A$, $\kappa_B$ | gemessene Frequenz eines komplexen Mischsignals |

**Patentansprüche**

1.  Messeinrichtung (10, 11, 12, 13, 14, 15, 16, 30, 50), insbesondere Messeinrichtung (10, 11, 12, 13, 14, 15, 16, 30, 50) für ein Kraftfahrzeug (1), zum Messen eines Abstandes zwischen der Messeinrichtung (10, 11, 12, 13, 14, 15, 16, 30, 50) und mindestens einem Objekt (20) und/ oder zum Messen einer Geschwindigkeitsdifferenz (v) zwischen der Messeinrichtung (10, 11, 12, 13, 14, 15, 16, 30, 50) und dem mindestens einem Objekt (20), wobei die Messeinrichtung (10, 11, 12, 13, 14, 15, 16, 30, 50) eine Abstrahlvorrichtung (35, 55) zum Senden eines Sendesignals (s(t), sl(t)) aufweist, das zumindest zwei Signalabschnittsfolgen (A(t), B(t), C(t), D(t)), eine erste Signalabschnittsfolge (A(t)) und eine zweite Signalabschnittsfolge (B(t)), mit zumindest je zwei zeitlich alternierenden Signalabschnitten (A1, A2, A3, B1, B2, B3) umfasst, wobei sich zumindest zwei Signalabschnitte (A1, A2, A3, B1, B2, B3) einer Signalabschnittsfolge (A(t), B(t), C(t), D(t)) in ihrer Frequenz um je eine Differenzfrequenz ($f_{Hub,A}$/(N-1), $f_{Hub,B}$/(N-1)) unterscheiden, und wobei die Differenzfrequenz ($f_{Hub,A}$/(N-1)) der ersten Signalabschnittsfolge (A(t)) von der Differenzfrequenz ($f_{Hub,B}$/(N-1)) der zweiten Signalabschnittsfolge (B(t)) verschieden ist, **dadurch gekennzeichnet, dass** für die Signalabschnitte verschiedener Signalabschnittsfolgen eine unterschiedliche Zeitdauer vorgesehen ist.

2. Messeinrichtung (10, 11, 12, 13, 14, 15, 16, 30, 50) nach Anspruch 1, **dadurch gekennzeichnet, dass** es eine Empfangseinrichtung (36, 56) zum Empfangen eines von dem mindestens einen Objekt (20) reflektierten Reflexionssignals (r(t), rl(t)) des Sendesignals (s(t), sl(t)) aufweist.

3. Messeinrichtung (10, 11, 12, 13, 14, 15, 16, 30, 50) nach Anspruch 2, **dadurch gekennzeichnet, dass** es einen Mischer (38, 39, 58, 59) zum Mischen der ersten Signalabschnittsfolge (A(t)) mit einem von dem mindestens einen Objekt (20) reflektierten Anteil der ersten Signalabschnittsfolge (A(t)) des Reflexionssignals (r(t), rl(t)) zu einem ersten Mischsignal ($I_A(t)$, $Q_A(t)$, $m_A(t)$) aufweist.

4. Messeinrichtung (10, 11, 12, 13, 14, 15, 16, 30, 50) nach Anspruch 3, **dadurch gekennzeichnet, dass** es eine Auswertevorrichtung (41, 61) zur Ermittlung der gemessenen Frequenz oder den Frequenzen ($\kappa_A$) des ersten Mischsignals ($I_A(t)$, $Q_A(t)$, $m_A(t)$) aufweist.

5. Messeinrichtung (10, 11, 12, 13, 14, 15, 16, 30, 50) nach Anspruch 4, **dadurch gekennzeichnet, dass** mittels der Auswertevorrichtung (41, 61) der Abstand zwischen der Messeinrichtung (10, 11, 12, 13, 14, 15, 16, 30, 50) und dem mindestens einen Objekt (20) in Abhängigkeit der gemessenen Frequenz oder den Frequenzen ($\kappa_A$) des ersten Mischsignals ($I_A(t)$, $Q_A(t)$, $m_A(t)$) bestimmbar ist bzw. sind.

6. Messeinrichtung (10, 11, 12, 13, 14, 15, 16, 30, 50) nach Anspruch 4 oder 5, **dadurch gekennzeichnet, dass** mittels der Auswertevorrichtung (41, 61) die Geschwindigkeitsdifferenz (v) zwischen der Messeinrichtung (10, 11, 12, 13, 14, 15, 16, 30, 50) und dem mindestens einen Objekt (20) in Abhängigkeit der gemessenen Frequenz oder den Frequenzen ($\kappa_A$) des ersten Mischsignals ($I_A(t)$, $Q_A(t)$, $m_A(t)$) bestimmbar ist bzw. sind.

7. Messeinrichtung (10, 11, 12, 13, 14, 15, 16, 30, 50) nach einem der Ansprüche 3 bis 6, **dadurch gekennzeichnet, dass** mittels des Mischers (38, 39, 58, 59) die zweite Signalabschnittsfolge (B(t)) mit einem von dem mindestens einen Objekt (20) reflektierten Anteil der zweiten Signalabschnittsfolge (B(t)) des Reflexionssignals (r(t), rl(t)) zu einem zweiten Mischsignal ($I_B(t)$, $Q_B(t)$, $m_B(t)$) mischbar ist.

8. Messeinrichtung (10, 11, 12, 13, 14, 15, 16, 30, 50) nach Anspruch 7, **dadurch gekennzeichnet, dass** mittels der Auswertevorrichtung (41, 61) die gemessene Frequenz oder die Frequenzen ($\kappa_B$) des zweiten Mischsignals ($I_B(t)$, $Q_B(t)$, $m_B(t)$) ermittelbar ist bzw. sind.

9. Messeinrichtung (10, 11, 12, 13, 14, 15, 16, 30, 50) nach Anspruch 8, **dadurch gekennzeichnet, dass** mittels der Auswertevorrichtung (41, 61) der Abstand zwischen der Messeinrichtung (10, 11, 12, 13, 14, 15, 16, 30, 50) und dem mindestens einen Objekt (20) in Abhängigkeit der gemessenen Frequenz oder den Frequenzen ($\kappa_A$) des ersten Mischsignals ($I_A(t)$, $Q_A(t)$, $m_A(t)$) und der dominierenden Frequenz ($\kappa g$) des zweiten Mischsignals ($I_B(t)$, $Q_B(t)$, $m_B(t)$) bestimmbar ist bzw. sind.

10. Messeinrichtung (10, 11, 12, 13, 14, 15, 16, 30, 50) nach Anspruch 8 oder 9, **dadurch gekennzeichnet, dass** mittels der Auswertevorrichtung (41, 61) die Geschwindigkeitsdifferenz (v) zwischen der Messeinrichtung (10, 11, 12, 13, 14, 15, 16, 30, 50) und dem mindestens einen Objekt (20) in Abhängigkeit der gemessenen Frequenz oder den Frequenzen ($\kappa_A$) des ersten Mischsignals ($I_A(t)$, $Q_A(t)$, $m_A(t)$) und der gemessenen Frequenz oder den Frequenzen ($\kappa_B$) des zweiten Mischsignals ($I_B(t)$, $Q_B(t)$, $m_B(t)$) bestimmbar ist bzw. sind.

11. Messeinrichtung (10, 11, 12, 13, 14, 15, 16, 30, 50) nach einem der Ansprüche 7 bis 10, **dadurch gekennzeichnet, dass** mittels der Auswertevorrichtung (41, 61) die Differenz ($\Delta\psi$) der Phase des ersten Mischsignals ($I_A(t)$, $Q_A(t)$, $m_A(t)$) und der Phase des zweiten Mischsignals ($I_B(t)$, $Q_B(t)$, $m_B(t)$) bestimmbar ist.

**12.** Messeinrichtung (10, 11, 12, 13, 14, 15, 16, 30, 50) nach Anspruch 11, **dadurch gekennzeichnet, dass** mittels der Auswertevorrichtung (41, 61) der Abstand zwischen der Messeinrichtung (10, 11, 12, 13, 14, 15, 16, 30, 50) und dem mindestens einen Objekt (20) in Abhängigkeit der Differenz ($\Delta\psi$) der Phase des ersten Mischsignals ($I_A(t)$, $Q_A(t)$, $m_A(t)$) und der Phase des zweiten Mischsignals ($I_B(t)$, $Q_B(t)$, $m_B(t)$) bestimmbar ist.

**13.** Messeinrichtung (10, 11, 12, 13, 14, 15, 16, 30, 50) nach Anspruch 11 oder 12, **dadurch gekennzeichnet, dass** mittels der Auswertevorrichtung (41, 61) die Geschwindigkeitsdifferenz (v) zwischen der Messeinrichtung (10, 11, 12, 13, 14, 15, 16, 30, 50) und dem mindestens einen Objekt (20) in Abhängigkeit Differenz ($\Delta\psi$) der Phase des ersten Mischsignals ($I_A(t)$, $Q_A(t)$, $m_A(t)$) und der Phase des zweiten Mischsignals ($I_B(t)$, $Q_B(t)$, $m_B(t)$) bestimmbar ist.

**14.** Verfahren zum Messen eines Abstandes zwischen einer Abstrahlvorrichtung (35, 55) und mindestens einem Objekt (20) und/oder zum Messen einer Geschwindigkeitsdifferenz (v) zwischen der Abstrahlvorrichtung (35, 55) und dem mindestens einen Objekt (20), wobei mittels der Abstrahlvorrichtung (35, 55) ein Sendesignal (s(t), sl(t)) mit zumindest zwei Signalabschnittsfolgen (A(t), B(t), C(t), D(t)), einer ersten Signalabschnittsfolge (A(t)) und einer zweiten Signalabschnittsfolge (B(t)), mit zumindest je zwei zeitlich alternierenden Signalabschnitten (A1, A2, A3, B1, B2, B3) gesendet wird, wobei sich zumindest zwei Signalabschnitte (A1, A2, A3, B1, B2, B3) einer Signalabschnittsfolge (A(t), B(t), C(t), D(t)) in ihrer Frequenz um je eine Differenzfrequenz (fHub,A/(N-1), fHub,B/(N-1)) unterscheiden, und wobei die Differenzfrequenz (fHub,A/(N-1)) der ersten Signalabschnittsfolge (A(t)) von der Differenzfrequenz (fHub,B/(N-1)) der zweiten Signalabschnittsfolge (B(t)) verschieden ist, **dadurch gekennzeichnet, dass** für die Signalabschnitte verschiedener Signalabschnittsfolgen eine unterschiedliche Zeitdauer vorgesehen ist.

**15.** Verfahren nach Anspruch 14, **dadurch gekennzeichnet, dass** ein von dem mindestens einen Objekt (20) reflektiertes Reflexionssignal (r(t), rl(t)) des Sendesignal (s(t), sl(t)) empfangen wird.

**16.** Verfahren nach Anspruch 15, **dadurch gekennzeichnet, dass** die erste Signalabschnittsfolge (A(t)) mit einem von dem mindestens einen Objekt (20) reflektierten Anteil der ersten Signalabschnittsfolge (A(t)) des Reflexionssignals (r(t), rl(t)) zu einem ersten Mischsignal ($I_A(t)$, $Q_A(t)$, $m_A(t)$) gemischt wird.

**17.** Verfahren nach Anspruch 16, **dadurch gekennzeichnet, dass** die dominierende Frequenz ($\kappa_A$) des ersten Mischsignals ($I_A(t)$, $Q_A(t)$, $m_A(t)$) ermittelt wird.

**18.** Verfahren nach Anspruch 17, **dadurch gekennzeichnet, dass** der Abstand zwischen der Abstrahlvorrichtung (35, 55) und dem mindestens einen Objekt (20) in Abhängigkeit der dominierenden Frequenz ($\kappa_A$) des ersten Mischsignals ($I_A(t)$, $Q_A(t)$, $m_A(t)$) bestimmt wird.

**19.** Verfahren nach Anspruch 17 oder 18, **dadurch gekennzeichnet, dass** die Geschwindigkeitsdifferenz (v) zwischen der Abstrahlvorrichtung (35, 55) und dem mindestens einen Objekt (20) in Abhängigkeit der dominierenden Frequenz ($\kappa_A$) des ersten Mischsignals ($I_A(t)$, $Q_A(t)$, $m_A(t)$) bestimmt wird.

**20.** Verfahren nach einem der Ansprüche 15 bis 19, **dadurch gekennzeichnet, dass** die zweite Signalabschnittsfolge (B(t)) mit einem von dem mindestens einen Objekt (20) reflektierten Anteil der zweiten Signalabschnittsfolge (B(t)) des Reflexionssignals (r(t), rl(t)) zu einem zweiten Mischsignal ($I_B(t)$, $Q_B(t)$, $m_B(t)$) gemischt wird und dass die dominierende Frequenz ($\kappa_A$) des zweiten Mischsignals ($I_B(t)$, $Q_B(t)$, $m_B(t)$) ermittelt wird.

**21.** Verfahren nach Anspruch 20, **dadurch gekennzeichnet, dass** der Abstand zwischen der Abstrahlvorrichtung (35, 55) und dem mindestens einen Objekt (20) in Abhängigkeit der dominierenden Frequenz ($\kappa_A$) des ersten Mischsignals ($I_A(t)$, $Q_A(t)$, $m_A(t)$) und des zweiten Mischsignals ($I_B(t)$, $Q_B(t)$, $m_B(t)$) bestimmt wird.

**22.** Verfahren nach Anspruch 20 oder 21, **dadurch gekennzeichnet, dass** die Geschwindigkeitsdifferenz (v) zwischen der Abstrahlvorrichtung (35, 55) und dem mindestens einen Objekt (20) in Abhängigkeit der dominierenden Frequenz ($\kappa_A$) des ersten Mischsignals ($I_A(t)$, $Q_A(t)$, $m_A(t)$) und der dominierenden Frequenz ($\kappa_B$) des zweiten Mischsignals ($I_B(t)$, $Q_B(t)$, $m_B(t)$) bestimmt wird.

**23.** Verfahren nach Anspruch 20, 21 oder 22, **dadurch gekennzeichnet, dass** die Differenz ($\Delta\psi$) der Phase des ersten Mischsignals ($I_A(t)$, $Q_A(t)$, $m_A(t)$) und der Phase des zweiten Mischsignals ($I_B(t)$, $Q_B(t)$, $m_B(t)$) bestimmt wird.

**24.** Verfahren nach Anspruch 23, **dadurch gekennzeichnet, dass** der Abstand zwischen der Abstrahlvorrichtung (35, 55) und dem mindestens einen Objekt (20) in Abhängigkeit der Differenz ($\Delta\psi$) der Phase des ersten Mischsignals

($I_A(t)$, $Q_A(t)$, $m_A(t)$) und der Phase des zweiten Mischsignals ($I_B(t)$, $Q_B(t)$, $m_B(t)$) bestimmt wird.

**25.** Verfahren nach Anspruch 23 oder 24, **dadurch gekennzeichnet, dass** die Geschwindigkeitsdifferenz (v) zwischen der Abstrahlvorrichtung (35, 55) und dem mindestens einen Objekt (20) in Abhängigkeit Differenz ($\Delta\psi$) der Phase des ersten Mischsignals ($I_A(t)$, $Q_A(t)$, $m_A(t)$) und der Phase des zweiten Mischsignals ($I_B(t)$, $Q_B(t)$, $m_B(t)$) bestimmt wird.

**Claims**

**1.** Measuring device (10, 11, 12, 13, 14, 15, 16, 30, 50), more particularly measuring device (10, 11, 12, 13, 14, 15, 16, 30, 50) for a motor vehicle (1), for measuring a distance between the measuring device (10, 11, 12, 13, 14, 15, 16, 30, 50) and at least one object (20) and/or for measuring the speed difference (v) between the measuring device (10, 11, 12, 13, 14, 15, 16, 30, 50) and the at least one object (20), wherein the measuring device (10, 11, 12, 13, 14, 15, 16, 30, 50) comprises an emission apparatus (35, 55) for transmitting a transmission signal (s(t), sl(t)) which comprises at least two signal portion sequences (A(t), B(t), C(t), D(t)), a first signal portion sequence (A(t)) and a second signal portion sequence (B(t)), with in each case at least two signal portions (A1, A2, A3, B1, B2, B3) alternating in time, wherein at least two signal portions (A1, A2, A3, B1, B2, B3) of a signal portion sequence (A(t), B(t), C(t), D(t)) differ in terms of the frequency thereof by a difference frequency ($f_{lift,A}/(N-1)$, $f_{lift,B}/(N-1)$) in each case and wherein the difference frequency ($f_{lift,A}/(N-1)$) of the first signal portion sequence (A(t)) differs from the difference frequency ($f_{lift,B}/(N-1)$) of the second signal portion sequence B(t)), **characterized in that** a different time duration is provided for the signal portions of different signal portion sequences.

**2.** Measuring device (10, 11, 12, 13, 14, 15, 16, 30, 50) according to Claim 1, **characterized in that** it comprises a reception device (36, 56) for receiving a reflection signal (r(t), rl(t)) of the transmission signal (s(t), sl(t)) which was reflected at the at least one object (20).

**3.** Measuring device (10, 11, 12, 13, 14, 15, 16, 30, 50) according to Claim 2, **characterized in that** it comprises a mixer (38, 39, 58, 59) for mixing the first signal portion sequence (A(t)) with a component of the first signal portion sequence (A(t)) of the reflection signal (r(t), rl(t)) which was reflected at the at least one object (20) in order to form a first mixed signal ($I_A(t)$, $Q_A(t)$, $m_A(t)$).

**4.** Measuring device (10, 11, 12, 13, 14, 15, 16, 30, 50) according to Claim 3, **characterized in that** it comprises an evaluation apparatus (41, 61) for establishing the measured frequency or the frequencies ($\kappa_A$) of the first mixed signal ($I_A(t)$, $Q_A(t)$, $m_A(t)$).

**5.** Measuring device (10, 11, 12, 13, 14, 15, 16, 30, 50) according to Claim 4, **characterized in that**, by way of the evaluation apparatus (41, 61), the distance between the measuring device (10, 11, 12, 13, 14, 15, 16, 30, 50) and the at least one object (20) is determinable in a manner dependent on the measured frequency or the frequencies ($\kappa_A$) of the first mixed signal ($I_A(t)$, $Q_A(t)$, $m_A(t)$).

**6.** Measuring device (10, 11, 12, 13, 14, 15, 16, 30, 50) according to Claim 4 or 5, **characterized in that**, by way of the evaluation apparatus (41, 61), the speed difference (v) between the measuring device (10, 11, 12, 13, 14, 15, 16, 30, 50) and the at least one object (20) is determinable in a manner dependent on the measured frequency or the frequencies ($\kappa_A$) of the first mixed signal ($I_A(t)$, $Q_A(t)$, $M_A(t)$).

**7.** Measuring device (10, 11, 12, 13, 14, 15, 16, 30, 50) according to one of Claims 3 to 6, **characterized in that**, by means of the mixer (38, 39, 58, 59), the second signal portion sequence (B(t)) is mixable with a component of the second signal portion sequence (B(t)) of the reflection signal (r(t), rl(t)) which was reflected by the at least one object (20) to form a second mixed signal ($I_B(t)$, $Q_B(t)$, $m_B(t)$).

**8.** Measuring device (10, 11, 12, 13, 14, 15, 16, 30, 50) according to Claim 7, **characterized in that**, by way of the evaluation apparatus (41, 61), the measured frequency or the frequencies ($\kappa_B$) of the second mixed signal ($I_B(t)$, $Q_B(t)$, $m_B(t)$) is/are establishable.

**9.** Measuring device (10, 11, 12, 13, 14, 15, 16, 30, 50) according to Claim 8, **characterized in that**, by way of the evaluation apparatus (41, 61), the distance between the measuring device (10, 11, 12, 13, 14, 15, 16, 30, 50) and the at least one object (20) is determinable in a manner dependent on the measured frequency or the frequencies

($\kappa_A$) of the first mixed signal ($I_A(t)$, $Q_A(t)$, $m_A(t)$) and the dominating frequency ($\kappa_B$) of the second mixed signal ($I_B(t)$, $Q_B(t)$, $m_B(t)$).

10. Measuring device (10, 11, 12, 13, 14, 15, 16, 30, 50) according to Claim 8 or 9, **characterized in that**, by way of the evaluation apparatus (41, 61), the speed difference (v) between the measuring device (10, 11, 12, 13, 14, 15, 16, 30, 50) and the at least one object (20) is determinable in a manner dependent on the measured frequency or the frequencies ($\kappa_A$) of the first mixed signal ($I_A(t)$, $Q_A(t)$, $m_A(t)$) and the measured frequency or the frequencies ($\kappa_B$) of the second mixed signal ($I_B(t)$, $Q_B(t)$, $m_B(t)$).

11. Measuring device (10, 11, 12, 13, 14, 15, 16, 30, 50) according to one of Claims 7 to 10, **characterized in that**, by means of the evaluation apparatus (41, 61), the difference ($\triangle\psi$) between the phase of the first mixed signal ($I_A(t)$, $Q_A(t)$, $m_A(t)$) and the phase of the second mixed signal ($I_B(t)$, $Q_B(t)$, $m_B(t)$) is establishable.

12. Measuring device (10, 11, 12, 13, 14, 15, 16, 30, 50) according to Claim 11, **characterized in that**, by way of the evaluation apparatus (41, 61), the distance between the measuring device (10, 11, 12, 13, 14, 15, 16, 30, 50) and the at least one object (20) is determinable in a manner dependent on the difference ($\triangle\psi$) between the phase of the first mixed signal ($I_A(t)$, $Q_A(t)$, $m_A(t)$) and the phase of the second mixed signal ($I_B(t)$, $Q_B(t)$, $m_B(t)$).

13. Measuring device (10, 11, 12, 13, 14, 15, 16, 30, 50) according to Claim 11 or 12, **characterized in that**, by way of the evaluation apparatus (41, 61), the speed difference (v) between the measuring device (10, 11, 12, 13, 14, 15, 16, 30, 50) and the at least one object (20) is determinable in a manner dependent on the difference ($\triangle\psi$) between the phase of the first mixed signal ($I_A(t)$, $Q_A(t)$, $m_A(t)$) and the phase of the second mixed signal ($I_B(t)$, $Q_B(t)$, $m_B(t)$).

14. Method for measuring a distance between an emission apparatus (35, 55) and at least one object (20) and/or for measuring the speed difference (v) between the emission apparatus (35, 55) and the at least one object (20), wherein, by means of the emission apparatus (35, 55), a transmission signal (s(t), sl(t)) which comprises at least two signal portion sequences (A(t), B(t), C(t), D(t)), a first signal portion sequence (A(t)) and a second signal portion sequence (B(t)), with in each case at least two signal portions (A1, A2, A3, B1, B2, B3) alternating in time, is sent, wherein at least two signal portions (A1, A2, A3, B1, B2, B3) of a signal portion sequence (A(t), B(t), C(t), D(t)) differ in terms of the frequency thereof by a difference frequency ($f_{lift,A}/(N-1)$, $f_{lift,B}/(N-1)$) in each case and wherein the difference frequency ($f_{lift,A}/(N-1)$) of the first signal portion sequence (A(t)) differs from the difference frequency ($f_{lift,B}/(N-1)$) of the second signal portion sequence B(t)), **characterized in that** a different time duration is provided for the signal portions of different signal portion sequences.

15. Method according to Claim 14, **characterized in that** a reflection signal (r(t), rl(t)) of the transmission signal (s(t), sl(t)) which was reflected at the at least one object (20) is received.

16. Method according to Claim 15, **characterized in that** the first signal portion sequence (A(t)) is mixed with a component of the first signal portion sequence (A(t)) of the reflection signal (r(t), rl(t)) which was reflected at the at least one object (20) in order to form a first mixed signal ($I_A(t)$, $Q_A(t)$, $m_A(t)$).

17. Method according to Claim 16, **characterized in that** the dominant frequency ($\kappa_A$) of the first mixed signal ($I_A(t)$, $Q_A(t)$, $m_A(t)$) is established.

18. Method according to Claim 17, **characterized in that** the distance between the emission apparatus (35, 55) and the at least one object (20) is determined in a manner dependent on the dominant frequency ($\kappa_A$) of the first mixed signal ($I_A(t)$, $Q_A(t)$, $m_A(t)$).

19. Method according to Claim 17 or 18, **characterized in that** the speed difference (v) between the emission apparatus (35, 55) and the at least one object (20) is determined in a manner dependent on the dominant frequency ($\kappa_A$) of the first mixed signal ($I_A(t)$, $Q_A(t)$, $m_A(t)$).

20. Method according to one of Claims 15 to 19, **characterized in that** the second signal portion sequence (B(t)) is mixed with a component of the second signal portion sequence (B(t)) of the reflection signal (r(t), rl(t)) which was reflected at the at least one object (20) in order to form a second mixed signal ($I_B(t)$, $Q_B(t)$, $m_B(t)$) and **in that** the dominant frequency ($\kappa_A$) of the second mixed signal ($I_B(t)$, $Q_B(t)$, $m_B(t)$) is established.

21. Method according to Claim 20, **characterized in that** the distance between the emission apparatus (35, 55) and the at least one object (20) is determined in a manner dependent on the dominant frequency ($\kappa_A$) of the first mixed signal ($I_A(t)$, $Q_A(t)$, $m_A(t)$) and of the second mixed signal ($I_B(t)$, $Q_B(t)$, $m_B(t)$).

22. Method according to Claim 20 or 21, **characterized in that** the speed difference (v) between the emission apparatus (35, 55) and the at least one object (20) is determined in a manner dependent on the dominant frequency ($\kappa_A$) of the first mixed signal ($I_A(t)$, $Q_A(t)$, $m_A(t)$) and the dominant frequency ($\kappa_B$) of the second mixed signal ($I_B(t)$, $Q_B(t)$, $m_B(t)$).

23. Method according to Claim 20, 21 or 22, **characterized in that** the difference ($\Delta\psi$) between the phase of the first mixed signal ($I_A(t)$, $Q_A(t)$, $m_A(t)$) and the phase of the second mixed signal ($I_B(t)$, $Q_B(t)$, $m_B(t)$) is established.

24. Method according to Claim 23, **characterized in that** the distance between the emission apparatus (35, 55) and the at least one object (20) is determined in a manner dependent on the difference ($\Delta\psi$) between the phase of the first mixed signal ($I_A(t)$, $Q_A(t)$, $m_A(t)$) and the phase of the second mixed signal ($I_B(t)$, $Q_B(t)$, $m_B(t)$).

25. Method according to Claim 23 or 24, **characterized in that** the speed difference (v) between the emission apparatus (35, 55) and the at least one object (20) is determined in a manner dependent on the difference ($\Delta\psi$) between the phase of the first mixed signal ($I_A(t)$, $Q_A(t)$, $m_A(t)$) and the phase of the second mixed signal ($I_B(t)$, $Q_B(t)$, $m_B(t)$).

## Revendications

1. Dispositif de mesure (10, 11, 12, 13, 14, 15, 16, 30, 50), notamment dispositif de mesure (10, 11, 12, 13, 14, 15, 16, 30, 50) pour un véhicule automobile (1), destiné à mesurer un écart entre le dispositif de mesure (10, 11, 12, 13, 14, 15, 16, 30, 50) et au moins un objet (20) et/ou à mesurer une différence de vitesse (v) entre le dispositif de mesure (10, 11, 12, 13, 14, 15, 16, 30, 50) et l'au moins un objet (20), le dispositif de mesure (10, 11, 12, 13, 14, 15, 16, 30, 50) comportant un dispositif de rayonnement (35, 55) pour émettre un signal d'émission (s(t), sl(t)), qui comprend au moins deux séquences de portions de signaux (A(t), B(t), C(t), D(t)), une première séquence de portions de signaux (A(t)) et une deuxième séquence de portions de signaux (B(t)), avec au moins chacune deux portions de signaux (A1, A2, A3, B1, B2, B3) alternées dans le temps, au moins deux portions de signaux (A1, A2, A3, B1, B2, B3) d'une séquence de portions de signaux (A(t), B(t), C(t), D(t)) se différenciant chacune dans leur fréquence d'une fréquence différentielle ($f_{Hub,A}/(N-1)$, $f_{Hub,B}/(N-1)$) et la fréquence différentielle ($f_{Hub,A}/(N-1)$) de la première séquence de portions de signaux (A(t)) étant différente de la fréquence différentielle ($f_{Hub,B}/(N-1)$) de la deuxième séquence de portions de signaux (B(t)), **caractérisé en ce que** pour les portions de signaux de différentes séquences de portions de signaux, il est prévu une durée différente.

2. Dispositif de mesure (10, 11, 12, 13, 14, 15, 16, 30, 50) selon la revendication 1, **caractérisé en ce que** qu'il comporte un dispositif récepteur (36, 56) pour la réception d'un signal de réflexion (r(t), rl(t) du signal d'émission (s(t), sl(t)) réfléchi par l'au moins un objet (20).

3. Dispositif de mesure (10, 11, 12, 13, 14, 15, 16, 30, 50) selon la revendication 2, **caractérisé en ce qu'**il comporte un mélangeur (38, 39, 58, 59) pour mélanger la première séquence de portions de signaux (A(t)) avec une part réfléchie par l'au moins un objet (20) de la première séquence de portions de signaux (A(t)) du signal de réflexion (r(t), rl(t)) en un premier signal mixte ($I_A(t)$, $Q_A(t)$, $m_A(t)$).

4. Dispositif de mesure (10, 11, 12, 13, 14, 15, 16, 30, 50) selon la revendication 3, **caractérisé en ce qu'**il comporte un dispositif d'évaluation (41, 61) destiné à déterminer la fréquence mesurée ou les fréquences ($K_A$) du premier signal mixte ($I_A(t)$, $Q_A(t)$, $m_A(t)$).

5. Dispositif de mesure (10, 11, 12, 13, 14, 15, 16, 30, 50) selon la revendication 4, **caractérisé en ce qu'**au moyen du dispositif d'évaluation (41, 61), l'écart entre le dispositif de mesure (10, 11, 12, 13, 14, 15, 16, 30, 50) et l'au moins un objet (20) peut être déterminé en fonction de la fréquence mesurée ou des fréquences ($K_A$) du premier signal mixte ($I_A(t)$, $Q_A(t)$, $m_A(t)$).

6. Dispositif de mesure (10, 11, 12, 13, 14, 15, 16, 30, 50) selon la revendication 4 ou la revendication 5, **caractérisé en ce qu'**au moyen du dispositif d'évaluation (41, 61), la différence de vitesse (v) entre le dispositif de mesure (10, 11, 12, 13, 14, 15, 16, 30, 50) et l'au moins un objet (20) peut être déterminée en fonction de la fréquence mesurée ou des fréquences ($K_A$) du premier signal mixte ($I_A(t)$, $Q_A(t)$, $m_A(t)$).

**7.** Dispositif de mesure (10, 11, 12, 13, 14, 15, 16, 30, 50) selon l'une quelconque des revendications 3 à 6, **caractérisé en ce qu'**au moyen du mélangeur (38, 39, 58, 59), la deuxième séquence de portions de signaux (B(t)) est susceptible d'être mélangée avec la part réfléchie par l'au moins un objet 20) de la deuxième séquence de portions de signaux (B(t)) du signal de réflexion (r(t), rl(t)) en un deuxième signal mixte ($I_B(t)$, $Q_B(t)$, $m_B(t)$).

**8.** Dispositif de mesure (10, 11, 12, 13, 14, 15, 16, 30, 50) selon la revendication 7, **caractérisé en ce qu'**au moyen du dispositif d'évaluation (41, 61), la fréquence mesurée ou les fréquences ($K_B$) du deuxième signal mixte ($I_B(t)$, $Q_B(t)$, $m_B(t)$) peut ou peuvent être déterminée(s).

**9.** Dispositif de mesure (10, 11, 12, 13, 14, 15, 16, 30, 50) selon la revendication 8, **caractérisé en ce qu'**au moyen du dispositif d'évaluation (41, 61), l'écart entre le dispositif de mesure (10, 11, 12, 13, 14, 15, 16, 30, 50) et l'au moins un objet (20) est susceptible d'être déterminé en fonction de la fréquence mesurée ou des fréquences ($K_A$) du premier signal mixte ($I_A(t)$, $Q_A(t)$, $m_A(t)$) et de la fréquence dominante ($K_B$) du deuxième signal mixte ($I_B(t)$, $Q_B(t)$, $m_B(t)$).

**10.** Dispositif de mesure (10, 11, 12, 13, 14, 15, 16, 30, 50) selon la revendication 8 ou la revendication 9, **caractérisé en ce qu'**au moyen du dispositif d'évaluation (41, 61), la différence de vitesse (v) entre le dispositif de mesure (10, 11, 12, 13, 14, 15, 16, 30, 50) et l'au moins un objet (20) est susceptible d'être déterminée en fonction de la fréquence mesurée ou des fréquences ($K_A$) du premier signal mixte ($I_A(t)$, $Q_A(t)$, $m_A(t)$) et de la fréquence mesurée ou des fréquences ($K_B$) du deuxième signal mixte ($I_B(t)$, $Q_B(t)$, $m_B(t)$).

**11.** Dispositif de mesure (10, 11, 12, 13, 14, 15, 16, 30, 50) selon l'une quelconque des revendications 7 à 10, **caractérisé en ce qu'**au moyen de l'unité d'évaluation (41, 61), la différence ($\Delta\psi$) de la phase du premier signal mixte ($I_A(t)$, $Q_A(t)$, $m_A(t)$) et de la phase du deuxième signal mixte ($I_B(t)$, $Q_B(t)$, $m_B(t)$) est susceptible d'être déterminée.

**12.** Dispositif de mesure (10, 11, 12, 13, 14, 15, 16, 30, 50) selon la revendication 11, **caractérisé en ce qu'**au moyen du dispositif d'évaluation (41, 61), l'écart entre le dispositif de mesure (10, 11, 12, 13, 14, 15, 16, 30, 50) et l'au moins un objet (20) est susceptible d'être déterminé en fonction de la différence ($\Delta\Psi$) de la phase du premier signal mixte ($I_A(t)$, $Q_A(t)$, $m_A(t)$) et de la phase du deuxième signal mixte ($I_B(t)$, $Q_B(t)$, $m_B(t)$).

**13.** Dispositif de mesure (10, 11, 12, 13, 14, 15, 16, 30, 50) selon la revendication 11 ou la revendication 12, **caractérisé en ce qu'**au moyen du dispositif d'évaluation (41, 61), la différence de vitesse (v) entre le dispositif de mesure (10, 11, 12, 13, 14, 15, 16, 30, 50) et l'au moins un objet (20) est susceptible d'être déterminée en fonction de la différence ($\Delta\Psi$) de la phase du premier signal mixte ($I_A(t)$, $Q_A(t)$, $m_A(t)$) et de la phase du deuxième signal mixte ($I_B(t)$, $Q_B(t)$, $m_B(t)$).

**14.** Procédé destiné à mesurer un écart entre un dispositif de rayonnement (35, 55) et au moins un objet (20) et/ou pour mesurer une différence de vitesse (v) entre le dispositif de rayonnement (35, 55) et l'au moins un objet (20), au moyen du dispositif de rayonnement (35, 55), un signal d'émission (s(t), sl(t)) avec au moins deux séquences de portions de signaux (A(t), B(t), C(t), D(t)), une première séquence de portions de signaux (A(t)) et une deuxième séquence de portions de signaux (B(t)), avec au moins chacune deux portions de signaux (A1, A2, A3, B1, B2, B3) alternées dans le temps, étant émis, au moins deux portions de signaux (A1, A2, A3, B1, B2, B3) d'une séquence de portions de signaux (A(t), B(t), C(t), D(t)) se différenciant chacune dans leur fréquence d'une fréquence différentielle ($f_{Hub,A}/(N-1)$, $f_{Hub,B}/(N-1)$) et la fréquence différentielle ($f_{Hub,A}/(N-1)$) de la première séquence de portions de signaux (A(t)) étant différente de la fréquence différentielle $f_{Hub,B}/(N-1)$) de la deuxième séquence de portions de signaux (B(t)), **caractérisé en ce que** pour les portions de signaux de différentes séquences de portions de signaux, il est prévu une durée différente.

**15.** Procédé selon la revendication 14, **caractérisé en ce qu'**un signal de réflexion (r(t), rl(t)) réfléchi par l'au moins un objet (20) du signal d'émission (s(t), sl(t)) est réceptionné.

**16.** Procédé selon la revendication 15, **caractérisé en ce que** la première séquence de portions de signaux (A(t)) est mélangée avec une part de la première séquence de portions de signaux (A(t)) réfléchie par l'au moins un objet (20) du signal de réflexion (r(t), rl(t)) en un premier signal mixte ($I_A(t)$, $Q_A(t)$, $m_A(t)$).

**17.** Procédé selon la revendication 16, **caractérisé en ce que** la fréquence dominante ($K_A$) du premier signal mixte ($I_A(t)$, $Q_A(t)$, $m_A(t)$) est déterminée.

**18.** Procédé selon la revendication 17, **caractérisé en ce que** l'écart entre le dispositif de rayonnement (35, 55) et l'au moins un objet (20) est déterminé en fonction de la fréquence dominante ($K_A$) du premier signal mixte ($I_A(t)$, $Q_A(t)$, $m_A(t)$).

**19.** Procédé selon la revendication 17 ou la revendication 18, **caractérisé en ce que** la différence de vitesse (v) entre le dispositif de rayonnement (35, 55) et l'au moins un objet (20) est déterminée en fonction de la fréquence dominante ($K_A$) du premier signal mixte ($I_A(t)$, $Q_A(t)$, $m_A(t)$).

**20.** Procédé selon l'une quelconque des revendications 15 à 19, **caractérisé en ce que** la deuxième séquence de portions de signaux (B(t)) est mélangée avec une part réfléchie par l'au moins un objet (20) de la deuxième séquence de portions de signaux (B(t)) du signal de réflexion (r(t), rl(t)) en un deuxième signal mixte ($I_B(t)$, $Q_B(t)$, $m_B(t)$) et **en ce que** la fréquence dominante ($K_A$) du deuxième signal mixte ($I_B(t)$, $Q_B(t)$, $m_B(t)$) est déterminée.

**21.** Procédé selon la revendication 20, **caractérisé en ce que** l'écart entre le dispositif de rayonnement (35, 55) et l'au moins un objet (20) est déterminé en fonction de la fréquence dominante ($K_A$) du premier signal mixte ($I_A(t)$, $Q_A(t)$, $m_A(t)$) et du deuxième signal mixte ($I_B(t)$, $Q_B(t)$, $m_B(t)$).

**22.** Procédé selon la revendication 20 ou la revendication 21, **caractérisé en ce que** la différence de vitesse (v) entre le dispositif de rayonnement (35, 55) et l'au moins objet (20) est déterminée en fonction de la fréquence dominante ($K_A$) du premier signal mixte ($I_A(t)$, $Q_A(t)$, $m_A(t)$) et de la fréquence dominante ($K_B$) du deuxième signal mixte ($I_B(t)$, $Q_B(t)$, $m_B(t)$).

**23.** Procédé selon la revendication 20, la revendication 21 ou la revendication 22, **caractérisé en ce que** la différence ($\Delta\Psi$) de la phase du premier signal mixte ($I_A(t)$, $Q_A(t)$, $m_A(t)$) et de la phase du deuxième signal mixte ($I_B(t)$, $Q_B(t)$, $m_B(t)$) est déterminée.

**24.** Procédé selon la revendication 23, **caractérisé en ce que** l'écart entre le dispositif de rayonnement (35, 55) et l'au moins un objet (20) est déterminé en fonction de la différence ($\Delta\Psi$) de la phase du premier signal mixte ($I_A(t)$, $Q_A(t)$, $m_A(t)$) et de la phase du deuxième signal mixte ($I_B(t)$, $Q_B(t)$, $m_B(t)$).

**25.** Procédé selon la revendication 23 ou la revendication 24, **caractérisé en ce que** la différence de vitesse (v) entre le dispositif de rayonnement (35, 55) et l'au moins un objet (20) est déterminée en fonction de la différence ($\Delta\Psi$) de la phase du premier signal mixte ($I_A(t)$, $Q_A(t)$, $m_A(t)$) et de la phase du deuxième signal mixte ($I_B(t)$, $Q_B(t)$, $m_B(t)$).

FIG. 1

FIG. 2

vH

vF

20

1

8

R

16    2

6

7

3

EP 1 680 688 B1

FIG. 3

FIG. 4

FIG. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10050278 A1
- DE 19922411 A1
- DE 4244608 C2
- DE 10025844 A1
- DE 4331440 A1
- DE 68913423 T2
- GB 2334398 A

**In der Beschreibung aufgeführte Nicht-Patentliteratur**

- **R. MENDE.** Radarsysteme zur automatischen Abstandsregelung in Automobilen. *Technische Universität Carolo-Wilhelmina zu Braunschweig,* 1999